# EUROPEAN PATENT APPLICATION

(11) **EP 0 732 374 A2**
(43) Date of publication of application: **18.09.1996**
(21) Application number: 96301688.6
(22) Date of filing: 12.03.1996
(51) Int. Cl.: C08L 91/00, C08L 53/00, C09K 3/00

(54) **Water-swellable compositions**

(30) Priority: 17.03.1995 GB 9505407
(71) Applicant: Dussek Campbell Limited, Crayford, Kent DA1 4QJ (GB)
(72) Inventor: Moore, Simon, Crayford, Kent DA1 4QJ (GB)
(74) Representative: Lewis, Pauline Therese

(57) **Abstract**

A water-swellable composition comprising 80-95% by weight hydrocarbon oil, 3-7.5% by weight styrene-(ethylene-propylene) di-block copolymer, 5-15% by weight water-swellable polymer, 1-5% by weight surfactant and 2-10% by weight gelling agent. The water-swellable composition exhibits excellent anti-slump properties and no oil separation. The water-swellable composition may be used as a filler for sheathed cables.

## Description

This invention relates to water-swellable compositions and is particularly concerned with water-swellable compositions that are useful as cable-filling materials.

It is well known to provide a hydrophobic gel-type composition to fill any interstices between the components of a multicomponent cable, e.g. a telephone wire cable or between the fibres of an optical fibre cable. Such compositions are applied by pumping them transversely to, for example, bundles of the wires as the bundles are brought together and passed through a die plate or pipe. After the application of the hydrophobic composition, an outer sheath is applied to the bundles of wires by conventional means.

By filling the cable in this manner, it is intended to prevent water which may enter beneath the sheath from tracking along the length of the cable or from causing electrical problems. Moreover, water within the sheath may cause serious problems if it freezes and the ice crystals so formed exert pressure, e.g. on the tubes of fibres in an optical fibre cable.

It is also known to provide a water-swellable composition as a cable-filling composition. It can be difficult to completely fill all the cavities in a cable construction, particularly for the larger sizes of cable, so that the presence of a filler that swells on coming into contact with water can be very advantageous.

Thus it will be appreciated that a water-swellable composition to be used as a cable filling composition must have a number of desirable properties. It may, for example, be thixotropic so that it is relatively easy to apply under shear conditions but will revert to a more viscous, structured material after application. (However, thixotropy is not essential as many gels are applied in a hot molten state and others are soft enough to be pumped cold.). The applied composition should not be liable to "slumping" at elevated temperatures, i.e. it should be capable of maintaining its position even in vertical runs of cable so that it does not "slump" downwards. The constituents of the composition should not separate out during application nor over long periods of use especially at elevated temperatures. The swelling action of the composition when in contact with water, e.g. due to a failure of the outer sheath of a cable, should be sufficiently rapid to ensure that further water penetration is quickly prevented by the physical expansion that takes place.

It is an object of the present invention to provide an improved water-swellable composition which also retains good anti-slump and zero oil separation properties and ease of application to cables.

Accordingly in one aspect the invention provides a water-swellable composition comprising a hydrocarbon oil, a styrene- (ethylene-propylene) di-block copolymer, a water-swellable polymer, a surfactant and a gelling agent.

As indicated above, the composition of the invention is particularly intended for use as a cable filler and in another aspect the invention provides a sheathed cable containing as a filler a composition of the immediately preceding paragraph.

The preferred proportions by weight of the constituents of the composition are:
- hydrocarbon oil: - 80 to 95%, preferably 81.5 to 94%
- di-block copolymer:
- - 3 to 7.5%, preferably 3.5 to 6%
- water-swellable polymer: - 5 to 15, preferably 6 to 10%
- surfactant: - 1 to 5%, preferably 2 to 4%
- gelling agent: - 2 to 10%, preferably 3 to 8%.

The composition may, if desired, contain minor amounts of other constituents, e.g. anti-oxidants.

The hydrocarbon oil may be a synthetic or mineral hydrocarbon oil. It may be, for example, a paraffinic, naphthenic or polyisobutylene oil. It may be a mixture of oils, if desired.

Preferably the oil should have viscosity of not less than 2 centistokes at 100°C and not more than 40 centistokes at 100°C but the viscosity is not critical at the higher end.

The di-block copolymer of styrene and ethylene-propylene preferably contains from 25 to 45% by weight of styrene. It may be, for example, a KRATON di-block copolymer from Shell e.g. G1701 or G1702, Shellvis 40 or Shellvis 50.

The water-swellable polymer may be any suitable polymer having the desired swelling characteristics. For example, a particularly preferred material is a cross-linked sodium polyacrylate polymer, a specific example of which is known as Aqualic Fines, supplied by BASF. Alternatively, other polymers, e.g. special cellulosic materials may be used. These polymers are sometimes referred to as super absorbent polymers and some are described for example in "A Swell Idea" by F. L. Buchholz - Chemistry in Britain, August, 1994, pp 452-656.

The surfactant affects the rate of swelling of the composition by affecting the rate at which water can travel into the composition to contact the water-swellable composition and thereby effect the desired expansion. It is preferably a polyethylene oxide - polypropylene oxide copolymer (PEO-PPO). For example it may be a PLURONIC PE non-ionic surfactant supplied by BASF but a wide variety of other surfactants, anionic, cationic and non-ionic may usefully be used.

The gelling agent is preferably fumed silica or a bentonite clay. It is preferably hydrophobic but this is not essential. It may be for example Wacker H30 supplied by Wacker Chemie. It should provide sufficient gelling effect to the composition to give the properties desired by the end user. For example, it may be sufficient in quantity and properties to give a cone penetration value for the composition at 25°C in the range 235 to 255 but wider ranges e.g. from 200 to 350 may be found useful. (The cone penetration test is as detailed in the Institute of Petroleum 1P50/ASTM D217 test.).

Where an anti-oxidant is used, the amount will again be adjusted to meet the end use requirements but loadings of from 0.1 to 2% by weight may typically be found useful.

The ingredients of the compositions of the invention may be mixed by any convenient means. For example, a high shear mixer may be used to blend the oil and the di-block copolymer together and the other constituents be added later but this is not essential and a different order of mixing may be employed, if required.

Compositions of the invention have been found to possess an excellent balance of properties for use as cable fillers. They are easy to apply, have excellent anti-slump properties and exhibit no oil separation after extremes of mechanical shearing and exposure to elevated temperatures. They expand rapidly on contact with water and hence can rapidly stop any source of water leakage into a cable in which they are used as a filler composition.

Specific embodiments of the invention are illustrated in the accompanying example.

### Example

A cable-filling, water-swellable composition was made to the following formulation, all parts being by weight:

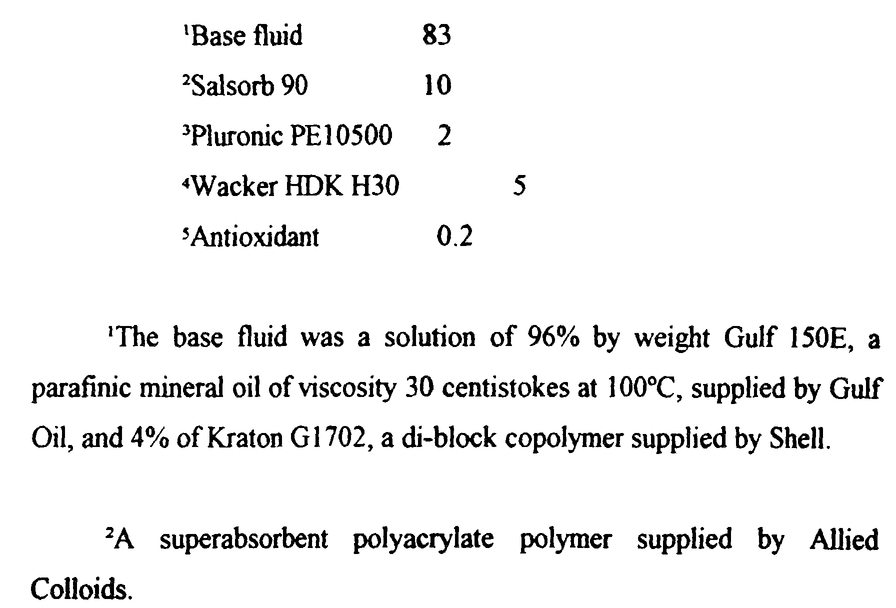

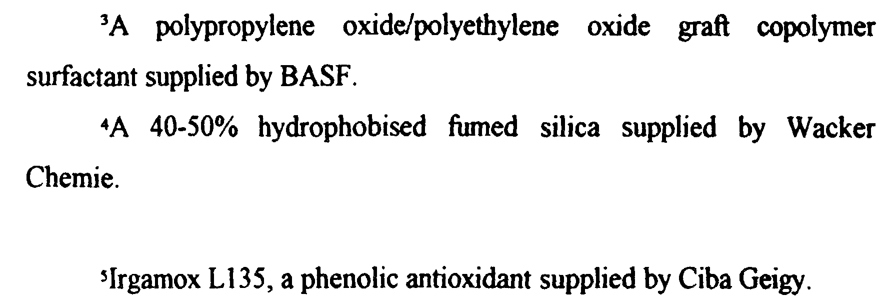

The composition was of soft, thixotropic grease consistency and had the following properties: -

| | |
|---|---|
| Cone penetration (ASTM D217) | 230-260 dmm. |
| Oil separation (FTM 791B 321-2) after 24 hours at 100°C | zero. |
| Volatility (by same method) | 0.4% typically. |
| *Viscosity (shear rate 20 s⁻¹) | 1000 Poise |

| | |
|---|---|
| *As measured on a Carri-Med CS500 Rheometer. 4 cm 2° cone and plate. | |

## Claims

1. A water-swellable composition comprising a hydrocarbon oil, a styrene-(ethylene-propylene) di-block copolymer, a water-swellable polymer, a surfactant and a gelling agent.

2. The water-swellable composition claimed in claim 1, comprising 80-95% by weight hydrocarbon oil, 3-7.5% by weight styrene- (ethylene-propylene) di-block copolymer, 5-15% by weight water-swellable polymer, 1-5% by weight surfactant and 2-10% by weight gelling agent.

3. The water-swellable composition claimed in claim 2, comprising 81.5-94% by weight hydrocarbon oil, 3.5-6% by weight styrene- (ethylene-propylene) di-block copolymer, 6-10% by weight water-swellable polymer, 2-4% by weight surfactant and 3-8% by weight gelling agent.

4. The water-swellable composition claimed in any one of the preceding claims, wherein the hydrocarbon oil has a viscosity of not less than 2 centistokes and not more than 40 centistokes at 100°C.

5. The water-swellable composition claimed in any one of the preceding claims, wherein the di-block copolymer comprises from 25 to 45% by weight of styrene.

6. The water-swellable composition claimed in any one of the preceding claims, wherein the surfactant is a polyethylene oxide - polypropylene oxide copolymer.

7. The water-swellable composition claimed in any one of the preceding claims, wherein the gelling agent is fumed silica or bentonite clay.

8. Use of the water-swellable composition claimed in any one of claims 1-7 as a cable filler.

9. A sheathed cable comprising the water-swellable composition defined in any one of claims 1-7 as a filler.
